# EUROPÄISCHE PATENTSCHRIFT

(11) **EP 1 967 452 B1**
(45) Veröffentlichungstag und Bekanntmachung des Hinweises auf die Patenterteilung: **27.01.2010**
(21) Anmeldenummer: 07004550.5
(22) Anmeldetag: 06.03.2007
(51) Int. Cl.: B65B 51/22, H05B 6/36, B29C 65/02, H05B 6/02

(54) **Flexibler induktor für das induktive Versiegeln von Gebinden**
Flexible inductor for inductive sealing of containers
Inducteur flexible pour le scellage inductif de fûts

(43) Veröffentlichungstag der Anmeldung: 10.09.2008
(73) Patentinhaber: HÜTTINGER Elektronik GmbH + Co. KG, 79111 Freiburg (DE)
(72) Erfinder: Schwiese, Hans-Joachim, 79102 Freiburg (DE); Mohring, Jens-Uwe, 79256 Buchenbach (DE)
(74) Vertreter: Kohler Schmid Möbus

(56) Entgegenhaltungen:
- EP-A2- 0 842 854
- EP-A2- 1 221 826
- FR-A1- 2 593 467
- US-A- 4 095 390
- US-A- 4 828 227
- US-A1- 2001 032 839
- US-A1- 2003 089 079

## Beschreibung

Die vorliegende Erfindung betrifft eine Versiegelungsvorrichtung nach dem Oberbegriff des Patentanspruch 1 mit wenigstens einer Induktionsspule aus einem zumindest teilweise flexiblen Leiter zum induktiven Versiegeln von durch die Versiegelungsvorrichtung bewegten Behältern durch Verschmelzen einer Behälteröffnung mit einer Siegelfolie.

Vorrichtungen zum induktiven Versiegeln umfassen grundsätzlich einen Hochfrequenzgenerator (HF-Generator) und eine Induktionsspule (oder kurz: Spule), die in einem Siegelungskopf angeordnet ist. Die Spule kann flach oder tunnelförmig ausgebildet und außerdem von einer Ferritumhüllung umgeben sein, die das elektromagnetische Feld in die Anwendungsrichtung konzentriert. Die Spule ist in der Regel in einen Reihenschwingkreis eingebunden, der nahe der Resonanzfrequenz angesteuert wird, um Stromüberhöhungen in der Spule zu erzeugen.

Der Siegelungskopf ist in der Regel über einer Fördervorrichtung angeordnet, mit deren Hilfe die zu versiegelnden Behälter oder Gebinde unter der Spule hindurch befördert werden. Die Behälter sind durch einen aufschraubbaren oder einrastbaren Deckel verschlossen, der eine Metallfolie und eine benachbart angeordnete Kunststoff-Siegelfolie enthält. Mit Hilfe der Induktionsspule werden in der Metallfolie Wirbelströme erzeugt, welche die Metallfolie erwärmen. Durch den Kontakt zwischen Metall- und Siegelfolie wird auch die Siegelfolie erwärmt und dadurch mit der Behälteröffnung verschmolzen. Tunnelförmige Induktionsspulen weisen gegenüber flachen Spulen den Vorteil auf, dass auch Behälter mit einem großen Abstand zwischen der Metallfolie und der Deckeloberkante versiegelt werden können, da die Spule von der Seite auf die Metallfolie einwirkt.

Aus der EP 0 842 854 B1 (DE 697 04 191 T2) ist bekannt, einen Siegelungskopf gemäß dem Oberbegriff des Anspruchs 1 mit tunnelförmiger Induktionsspule geometrisch so zu gestalten, dass Behälteröffnungen verschiedener Breite versiegelt werden können. Dazu ist im Siegelungskopf eine stufenförmige Öffnung ausgebildet, die im Betrieb unterschiedlich breite Behälterdeckel in ihren unterschiedlich großen Öffnungsabschnitten aufnimmt. Nachteilig an der in der EP 0 842 854 B1 beschriebenen Vorrichtung ist jedoch, dass sie nur für Behälterdeckel vorbestimmer Größe optimal angepasst ist und dass die Einwirkung des elektromagnetischen Feldes der Induktionsspule auf die Behälter vor allem von oben erfolgt, so dass Behälter mit hohen Deckeln, d.h. einem großen Abstand zwischen Deckeloberkante und innenliegender Metallfolie nur schlecht versiegelt werden können.

Demgegenüber ist es die Aufgabe der vorliegenden Erfindung, eine Vorrichtung der eingangs genannten Art zum induktiven Versiegeln von Behälteröffnungen anzugeben, mit der Behälter variabler Deckelform, -höhe und -größe einfach und effizient versiegelt werden können.

Die Aufgabe wird gelöst durch eine Versiegelungsvorrichtung mit den Merkmalen des Patentanspruchs 1. Vorteilhafte Weiterbildungen der erfindungsgemäßen Versiegelungsvorrichtung sind in den Unteransprüchen angegeben, deren Wortlaut hiermit durch Bezugnahme zu Gegenstand der Beschreibung gemacht wird, um unnötige Textwiederholungen zu vermeiden.

Erfindungsgemäß ist eine Versiegelungsvorrichtung mit wenigstens einer Induktionsspule aus einem zumindest teilweise flexiblen Leiter zum induktiven Versiegeln von durch die Versiegelungsvorrichtung bewegten Behältern durch Verschmelzen einer Behälteröffnung mit einer Siegelfolie dadurch gekennzeichnet, dass die Induktionsspule zwei zueinander in einem Abstand angeordnete Spulenhälften aufweist, in denen der Leiter jeweils im Wesentlichen parallel zu einer Bewegungsrichtung der Behälter verläuft und zwischen denen die Behälter hindurchbewegbar sind, wobei die Spulenhälften über wenigstens eine flexible Leiterschlaufe, die sich senkrecht zur Bewegungsrichtung der Behälter erstreckt, zu der Induktionsspule verbunden sind. Der Leiter ist also mindestens im Bereich der Leiterschlaufe flexibel ausgebildet.

Die beiden parallelen Hälften der Spulenwicklung bilden so einen Tunnel, durch den sich ein zu versiegelnder Behälter bewegt. Die Einwirkung des elektromagnetischen Feldes der Induktionsspule auf den Behälter erfolgt daher von der Seite, so dass auch Behälter mit hohen Deckeln gut versiegelt werden können. Außerdem wirkt das elektromagnetische Feld der Induktionsspule auf diese Weise gezielt auf den Rand der im Behälterdeckel befindlichen Metallfolie ein, wo die Wärmeentwicklung für den Versiegelungsprozess gewünscht wird.

Gemäß einer besonderen Ausgestaltung der vorliegenden Erfindung wird eine Versiegelungsvorrichtung mit einer Induktionsspule geschaffen, die vollständig aus flexiblem Litzendraht besteht, wobei der Litzendraht in mehreren Wicklungen im Wesentlichen in zwei parallelen Spulenhälften parallel zur Bewegungsrichtung der zu versiegelnden Behälter verläuft und außerdem eine Anzahl von Leiterschlaufen senkrecht zu dieser Bewegungsrichtung und insbesondere auch senkrecht zur Ebene der Behälteröffnung ausbildet. Die Ausgestaltung der Induktionsspule aus einem flexiblen, mehradrigen Leiter in Form von Litzendraht macht eine aufwändige Wasserkühlung der Spule unnötig. Die Kühlung der Spule kann in einfacher und kostengünstiger Weise mit Hilfe von Luft erfolgen.

Die Leiterschlaufen, die der Litzendraht der Induktionsspule senkrecht zur Bewegungsrichtung der zu versiegelnden Behälter ausbildet, ermöglichen eine Parallelverschiebung der in einer Grundstellung parallelen Spulen- oder Wicklungshälften gegeneinander, so dass zwischen den parallelen Wicklungshälften stufenlos ein variabler Abstand eingestellt werden kann. Auf diese Weise können Behälter mit unterschiedlichen Öffnungsbreiten versiegelt werden. Die Leiterschlaufen erstrecken sich so weit aus der Ebene der Behälteröffnung heraus, dass sie kein Hindernis für die Bewegung der Behälter darstellen.

In einer bevorzugten Ausführungsform können die Spulenhälften außerdem in einem Winkel zueinander positioniert werden, um die Einwirkung des elektromagnetischen Spulenfeldes auf die Behälter zu beeinflussen. Der zwischen den Spulenhälften eingeschlossen gedachte Winkel kann dabei in einer Ebene der Behälterbewegung bzw. der Behälteröffnung und/oder in einer hierzu senkrechten Ebene liegen.

Allgemein können die Spulenhälften demnach in einem endlichen Winkel zueinander angeordnet werden, wobei der Winkel in Bezug auf die Bewegungsrichtung der Behälter und/oder in Bezug auf eine zu dieser senkrechte Richtung bestimmt ist. Der Begriff "endlicher Winkel" bezeichnet vorliegend ein Winkelmaß ungleich Null Grad (0°).

Vorzugsweise ist die Induktionsspule in einem zumindest senkrecht zur Bewegungsrichtung der Behälter verschiebbaren Siegelungskopf angeordnet, so dass Behälter mit variabler Deckelhöhe versiegelt werden können. Mit anderen Worten: in Weiterbildung der erfindungsgemäßen Versiegelungsvorrichtung ist die Induktionsspule senkrecht zur Bewegungsrichtung der Behälter beweglich angeordnet.

Besonders bevorzugt ist die Induktionsspule mit mindestens einem Kondensator bzw. einer Kapazität in einem seriellen Schwingkreis zusammengeschaltet, um in der Spule Stromüberhöhungen zu erzeugen. Der gesamte Schwingkreis ist dabei im Siegelungskopf angeordnet, der über flexible Anschlussmittel in Form von Verbindungsleitungen (Kabeln) mit dem Hochfrequenzgenerator verbindbar ist. Dies ermöglicht eine einfache Austauschbarkeit eines zumindest die Spule, die Kapazität und geeignete Anschlussmittel zum Verbinden mit dem HF-Generator umfassenden Siegelungskopfes bei einer bestehenden Versiegelungsvorrichtung, insbesondere zu Nachrüstzwecken.

In einer Weiterbildung der Erfindung ist die Induktionsspule in mehrere Teilspulen unterteilt, zwischen denen jeweils mindestens ein Kondensator bzw. eine Kapazität angeordnet ist. Auf diese Weise kann die Spannung in den einzelnen Teilspulen gesenkt werden, um Spannungsüberschläge zu vermeiden.

Zur Konzentration des elektromagnetischen Feldes der Induktionsspule ist es möglich, die parallelen Wicklungshälften der Spule mit einer Umhüllung aus einem magnetisch gut und elektrisch schlecht leitenden Material, insbesondere aus Ferrit, zu umgeben.

Für eine einfache Anwendung des Siegelungskopfes erfolgt vorzugsweise die (Parallel-)Verschiebung der Spulenhälften der Induktionsspule synchron zu einem Verstellen einer Führungseinheit für die zu versiegelnden Behälter. Dazu sind die mechanische Verstelleineinrichtung der Spule und die Verstelleinrichtung der Behälterführung wirkungsmäßig gekoppelt oder vorzugsweise identisch, d.h. sie sind in Form einer gemeinsamen Verstelleinrichtung ausgebildet.

Weitere Vorteile und Eigenschaften der vorliegenden Erfindung ergeben sich aus der nachfolgenden Beschreibung von Ausführungsbeispielen anhand der Zeichnung. Aus den einzelnen Ausführungsbeispielen zu entnehmende Merkmale können einzeln oder in Kombination bei Ausgestaltungen der vorliegenden Erfindung verwirklicht sein. Es zeigt:
- Fig. 1: eine grundlegende schematische Darstellung einer erfindungsgemäßen Versiegelungsvorrichtung zum induktiven Versiegeln von Behältern;
- Fig. 2: eine erste Ausgestaltung der Induktionsspule in dem Siegelungskopf einer erfindungsgemäßen Versiegelungsvorrichtung im Querschnitt;
- Fig. 3: eine Draufsicht auf eine Ausgestaltung der Induktionsspule gemäß Fig. 2;
- Fig. 4: eine Draufsicht auf eine weitere Ausgestaltung der Induktionsspule gemäß Fig. 2;
- Fig. 5: eine weitere Ausgestaltung der Induktionsspule in einer erfindungsgemäßen Versiegelungsvorrichtung mit einer Verstelleinrichtung für die Induktionsspule im Querschnitt;
- Fig. 6: eine Draufsicht auf die Anordnung gemäß Fig. 5, bei der zwei Verstelleinrichtungen hintereinander angeordnet sind;
- Fig. 7: eine weitere Ausgestaltung der Induktionsspule der erfindungsgemäßen Versiegelungsvorrichtung; und
- Fig. 8: eine Anordnung aus Induktionsspule, Kapazität, Verstelleinrichtung und Anschlussmitteln an einem austauschbaren Rahmenteil für eine erfindungsgemäße Versiegelungsvorrichtung.

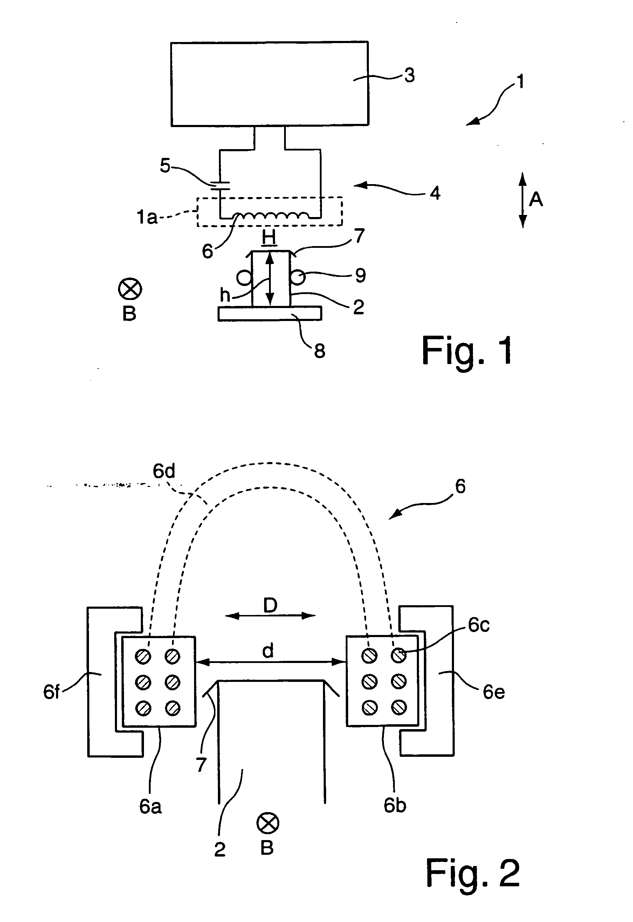

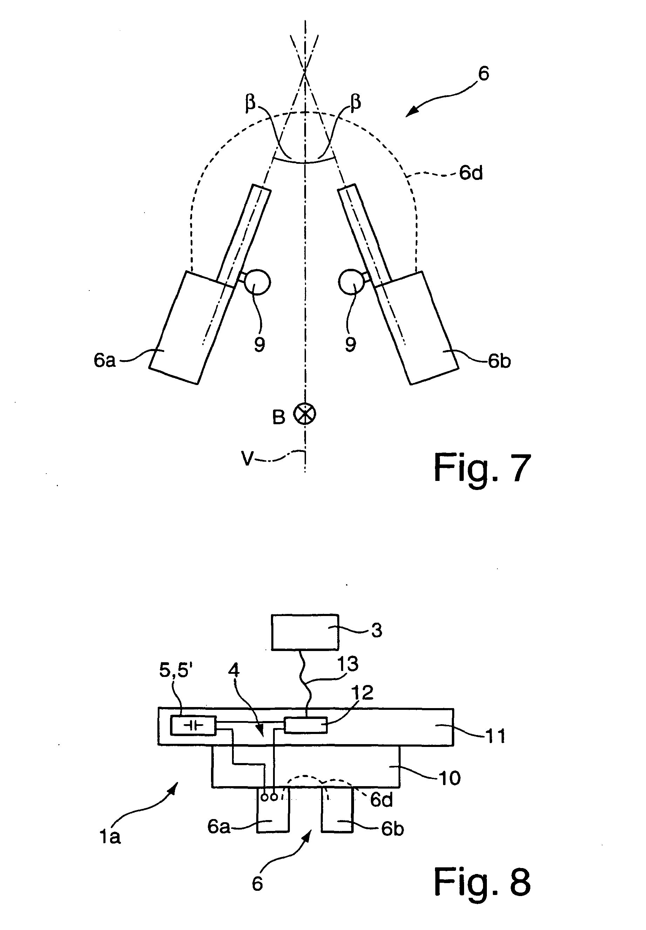

Fig. 1 zeigt anhand einer grundlegenden schematischen Darstellung eine erfindungsgemäße Versiegelungsvorrichtung 1 zum induktiven Versiegeln von Behältern oder Gebinden 2. Die Versiegelungsvorrichtung 1 weist einen Hochfrequenzgenerator (HF-Generator) 3 in Verbindung mit einem Schwingkreis 4 auf. Der Schwingkreis 4 umfasst eine Kapazität 5, die zum Erreichen einer Stromüberhöhung mit einer Induktionsspule (Induktivität) 6 in Reihe geschaltet ist. Zumindest die Induktionsspule 6 (vgl. Fig. 8) ist in einem beweglichen Siegelungskopf 1a der Versiegelungsvorrichtung 1 angeordnet. Der Siegelungskopf 1 a ist als Ganzes zumindest in Richtung des Doppelpfeils A beweglich, um die Versiegelungsvorrichtung 1 an unterschiedliche Höhenabmessungen h der zu versiegelnden Behälter 2 anzupassen. Wird der gesamte Schwingkreis 4 im Siegelungskopf angeordnet, der über Anschlussmittel, insbesondere in Form von flexiblen Verbindungsleitungen (Kabel), mit dem Hochfrequenzgenerator verbindbar ist, so ermöglicht dies eine einfache Austauschbarkeit des Siegelungskopfes bei einer bestehenden Versiegelungsvorrichtung.

Im stromdurchflossenen Zustand erzeugt die Induktionsspule 6 ein (elektro-)magnetisches Feld H, in dessen Bereich ein zu versiegelnder Behälter 2 mit einer Behälteröffnung beziehungsweise einer an der Behälteröffnung vorhandenen Siegelfolie 7 angeordnet ist. Der Behälter 2 wird typischerweise mittels einer Fördereinrichtung 8, wie einem Förderband, gegebenenfalls in Verbindung mit einer Führungseinrichtung 9 mit einer Bewegungsrichtung B durch den Bereich des magnetischen Feldes H, d.h. durch die Versiegelungsvorrichtung 1 bewegt. Dadurch wird die Siegelfolie 7 erwärmt und verschmilzt mit dem Material des Behälters 2, so dass dieser versiegelt ist. Die Induktionsspule 6 ist erfindungsgemäß in Abweichung von der rein schematischen Darstellung in Fig. 1 als tunnelartige Induktionsspule oder Tunnelinduktor ausgebildet, worauf im Folgenden noch genauer eingegangen wird.

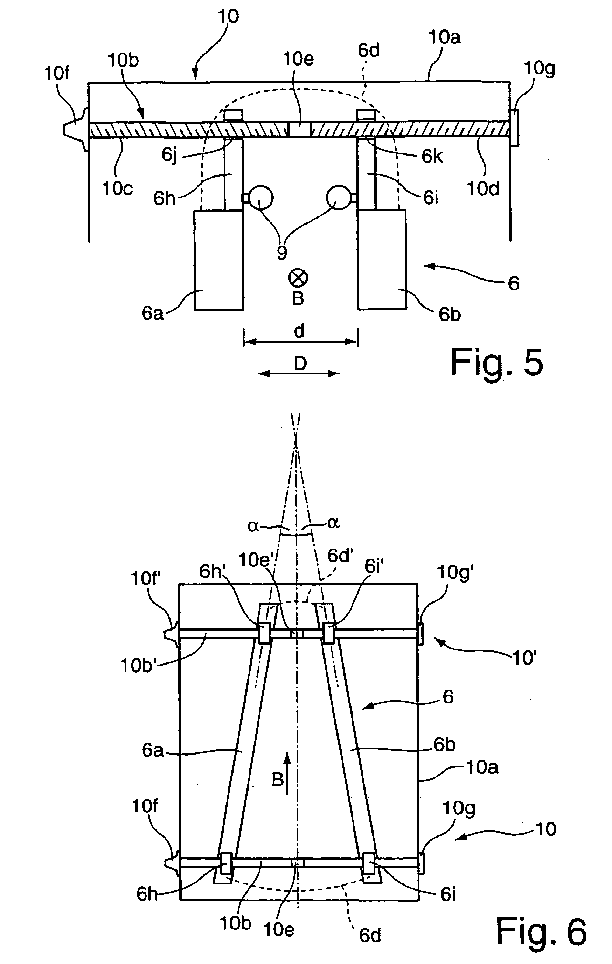

Fig. 2 zeigt eine erste Ausgestaltung der Induktionsspule 6 in dem Siegelungskopf 1a (Fig. 1) einer erfindungsgemäßen Versiegelungsvorrichtung 1. Die Induktionsspule 6 weist zwei Spulenhälften, nämlich eine erste Spulenhälfte 6a und eine zweite Spulenhälfte 6b auf. Die Induktionsspule 6 ist mehrwindig unter Verwendung eines mehradrigen flexiblen Leiters in Form eines Litzendrahts 6c ausgebildet, dessen Abschnitte in den ersten und zweiten Spulenhälften 6a, 6b jeweils im Wesentlichen parallel zueinander und im Wesentlichen parallel zu der Bewegungsrichtung B der Behälter 2 verlaufen und somit in Fig. 2 jeweils im Querschnitt dargestellt sind. Der verwendete Begriff "im Wesentlichen" soll zum Ausdruck bringen, dass im Rahmen der vorliegenden Erfindung auch Ausgestaltungen der Induktionsspule 6 möglich sind, bei denen die ersten und zweiten Spulenhälften 6a, 6b zueinander und/oder in Bezug auf die Bewegungsrichtung B in einem endlichen Winkel, das heißt einem Winkel ungleich 0° und vorzugsweise zwischen 0° und 45°angeordnet sind, worauf weiter unter noch genauer eingegangen wird (vgl. Fig. 6 und 7).

Die beiden Spulenhälften 6a, 6b sind zum Schaffen der Induktionsspule 6 durch weitere, in Figuren 2 schematisch gestrichelt dargestellte Litzendrahtabschnitte verbunden, die zusammen eine Leiterschlaufe 6d bilden, die sich senkrecht zur der Bewegungsrichtung B und senkrecht zu einer die Öffnung des Behälters 2 enthaltenden Ebene erstreckt. Auf diese Weise ist eine tunnelartige Induktionsspule 6 (Tunnelinduktor) gebildet. Obwohl vorliegend nur eine einzige Leiterschlaufe 6d dargestellt ist, können in Richtung einer Längserstreckung der Spulenhälften 6a, 6b auch eine Mehrzahl von Leiterschlaufen 6d vorgesehen sein, insbesondere zwei, das heißt eine Leiterschlaufe an jedem Ende der beiden Spulenhälften 6a, 6b. Aufgrund der Verwendung eines flexiblen Leiters 6c sowie der Ausbildung von Leiterschlaufen 6d lassen sich die beiden Spulenhälften 6a, 6b zunächst in einfacher Weise in Richtung des Doppelpfeils D parallel verschieden, so dass sich ein Abstand d zwischen den beiden Spulenhälften 6a, 6b entsprechend stufenlos einstellen lässt, um auf diese Weise flexibel auf unterschiedliche Behältermaße reagieren zu können. Die Leiterschlaufe 6d ist weiterhin derart ausgebildet und bemessen, dass auch Behälter 2 mit hohem Deckel, d.h. großem Abstand zwischen der Deckeloberkante und der Siegelfolie 7 den gebildeten Induktionsspulentunnel ungehindert passieren können.

Gemäß dem Ausführungsbeispiel der Fig. 2 sind die beiden Spulenhälften 6a, 6b auf ihrer jeweils von dem Behälter 2 abgewandten Seite mit einer Teilumhüllung 6e beziehungsweise 6f umgeben, die aus einem Material gebildet ist, das eine gute magnetische Leitfähigkeit und eine schlechte elektrische Leitfähigkeit aufweist. Vorzugsweise jedoch ohne Beschränkung handelt es sich bei diesem Material um ein ferritisches Material (Ferrit). Auf diese Weise kann das durch die Induktionsspule 6 erzeugte Feld auf den Bereich zwischen den beiden Spulenhälften 6a, 6b konzentriert werden.

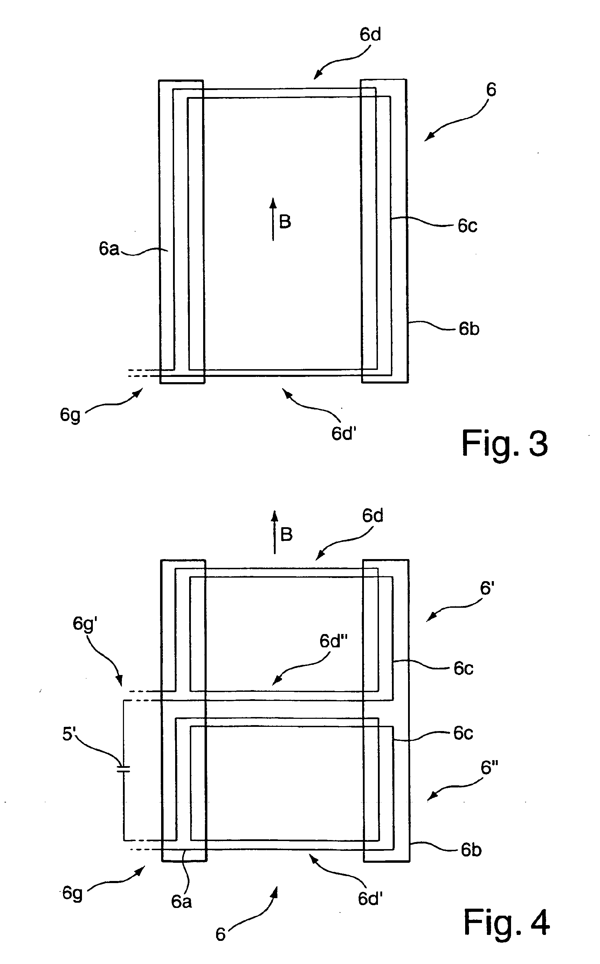

Fig. 3 zeigt eine schematische Draufsicht auf die Induktionsspule 6 gemäß Fig. 2, hier in einer Ausgestaltung mit zwei Leiterschlaufen 6d, 6d', durch die eine einzige Induktionsspule 6 gebildet ist. Diese weist bei 6g Anschlüsse zum Verbinden der Induktionsspule 6 mit den weiteren in Fig. 1 gezeigten Bestandteilen der Versiegelungsvorrichtung 1 auf, insbesondere der Kapazität 5 und dem HF-Generator 3.

Wie in Fig. 4 gezeigt, ist es auch möglich, die Induktionsspule 6 so aus einer Anzahl von Teilspulen 6', 6" aufzubauen, dass sich entsprechend mehr Leiterschlaufen 6d-6d" und Anschlüsse 6g, 6g' ergeben. Auf diese Weise lassen sich weitere Kapazitäten 5' zwischen die einzelnen Teilspulen 6', 6" schalten, so dass die Spannung in den einzelnen Teilspulen 6', 6" abgesenkt werden kann, um Spannungsüberschläge zu vermeiden. Alternativ ist es möglich, die Teilspulen 6', 6" so auszuführen, dass sich nur zwei Leiterschlaufen ergeben.

Fig. 5 zeigt schematisch eine Verstelleinrichtung 10 für die Induktionsspule 6, d.h. für die Anordnung aus den beiden Spulenhälften 6a, 6b. Die Verstelleinrichtung 10 ist bei dem gezeigten Ausführungsbeispiel mit einer Verstelleinrichtung für die Behälter-Führungseinrichtung 9 identisch. Sie weist ein im Querschnitt U-förmiges Strukturelement oder Gehäuseteil 10a auf, das über seinen gesamten Querschnitt von einer Doppel-Gewindestange 10b durchsetzt ist. Die Doppel-Gewindestange 10b weist einen ersten Gewindeabschnitt 10c und einen zweiten Gewindeabschnitt 10d auf, wobei das Gewinde in dem zweiten Gewindeabschnitt 10d zu dem Gewinde in den ersten Gewindeabschnitt 10c gegenläufig ist. Ein Mittelabschnitt 10e der Doppel-Gewindestange 10b ist gewindefrei. An einem Ende der Gewindestange 10b ist ein Bedienelement 10f in Form eines Drehknopfes angeordnet; das andere Ende der Doppel-Gewindestange 10b ist mittels eines Widerlagerteils 10g an dem Strukturelement 10a gehalten. Die beiden Spulenhälften 6a, 6b weisen jeweils ein sich in einer Richtung senkrecht zur Behälter-Bewegungsrichtung B und in Erstreckungsrichtung der Leiterschlaufe 6d erstreckendes Ansatzteil 6h, 6i auf, welches an seinem freien Ende einen Durchgang 6j, 6k mit Innengewinde zum Aufnehmen der Doppel-Gewindestange 10b besitzt. An ihrer jeweiligen Innenseite, das heißt an der den zu versiegelnden Behältern (hier nicht gezeigt) zugewandten Seite weisen die Ansatzteile 6h, 6i die bereits unter Bezugnahme auf Fig. 1 erwähnte Behälter-Führungseinrichtung 9 auf.

Durch Drehbetätigung des Drehknopfes 10f ist demnach über eine Bewegung der Doppel-Gewindestange 10b eine Parallelverschiebung der beiden Spulenhälften 6a, 6b in Richtung des Doppelpfeils D bewirkbar, wodurch es zu einer gleichmäßigen Änderung des Abstands d zwischen den Spulenhälften 6a, 6b über deren gesamte Längserstreckung kommt. Aufgrund der (mechanischen, wirkungsmäßigen) Kopplung zwischen der Induktionsspule 6 beziehungsweise den beiden Spulenhälften 6a, 6b einerseits und den Ansatzteilen 6h, 6i andererseits wird zugleich eine entsprechende Anpassung der Behälter-Führungseinrichtung 9 erreicht.

Die Einstellmöglichkeiten sind dabei nicht auf die vorstehend beschriebene Verstellung von Hand beschränkt. Insbesondere kann die beschriebene Drehbewegung der Doppel-Gewindestange 10b auch durch geeignet gesteuerte elektrische Antriebmittel (nicht gezeigt) oder dergleichen bewirkt sein. Ebenso ist eine Regelung der Antriebsmittel zur Anpassung an eine wechselnde Behälterbreite möglich, wozu die Versiegelungsvorrichtung ggf. entsprechende geeignete Sensoren (nicht gezeigt) für die Behälterbreite aufweist.

Insbesondere wenn an einem in Behälter-Bewegungsrichtung B vorderen bzw. hinteren Ende der Spulenhälften 6a, 6b jeweils eine Verstelleinrichtung 10 gemäß Fig. 5 vorgesehen ist, lassen sich die beiden Spulenhälften 6a, 6b auch unter einem endlichen Winkel ungleich 0° bezogen auf die Behälter-Bewegungsrichtung B anordnen. Dies ist in der nachfolgenden Fig. 6 schematisch dargestellt:

Fig. 6 zeigt eine Draufsicht auf die Anordnung gemäß Fig. 5, bei der in Richtung der Behälterbewegung B zwei Verstelleinrichtungen 10, 10' (vergleiche Fig. 5) in einem gemeinsamen Strukturelement 10a hintereinander angeordnet sind. Die einzelnen Elemente der Fig. 6 ergeben sich insbesondere aus dem Figuren 2 bis 5, so dass hierauf vorliegend nicht näher einzugehen ist. Wie gezeigt, lässt sich durch unterschiedliche Betätigung der Verstelleinrichtungen 10, 10' eine winkligsymmetrische Anordnung der beiden Spulenhälften 6a, 6b in Bezug auf die Behälter-Bewegungsrichtung B erreichen, wobei der Winkel zwischen der Bewegungsrichtung B und der jeweiligen Spulenhälften-Längsachse mit α bezeichnet ist. Auf diese Weise lässt sich insbesondere eine in Richtung der Behälterbewegung B zunehmende Intensität der Induktionswirkung erreichen. Auch die umgekehrte Anordnung (zunehmender Abstand d in Richtung der Behälterbewegung B) ist möglich.

Im Zuge dieser Ausgestaltung kann es erforderlich sein, die Verbindung zwischen den Spulenhälften 6a, 6b und den jeweiligen Ansatzteilen 6h, 6i flexibel, insbesondere drehbar auszugestalten.

Fig. 7 zeigt eine weitere Ausgestaltung der Induktionsspule 6 der erfindungsgemäßen Versiegelungsvorrichtung, wobei die Darstellungsart grundsätzlich derjenigen in Fig. 2 beziehungsweise Fig. 5 entspricht. Aufgrund der flexiblen Ausgestaltung des Leiters im Bereich der Leiterschlaufe(n) 6d ist erfindungsgemäß auch eine quasi beliebige relative Anordnung der beiden Spulenhälften 6a, 6b in einer Ebene senkrecht zur Behälter-Bewegungsrichtung B realisierbar. Vorliegend sind die beiden Spulenhälften 6a, 6b jeweils um einen Winkel β gegenüber der Vertikalen V nach innen gekippt. Auch die umgekehrte Anordnung (Kippen nach außen) ist möglich. Im Zuge der Ausgestaltung gemäß Fig. 7 kann insbesondere eine Ausgestaltung der Verstelleinrichtung 10 mit getrennten Gewindestangen (nicht gezeigt) zum separaten Bewegen/Kippen der einzelnen Spulenhälften 6a, 6b oder eine gänzlich andere Ausgestaltung der Verstelleinrichtung erforderlich sein, was jedoch nicht Gegenstand der vorliegenden Anmeldung ist. Auch eine Ausrichtung der Spulenhälften 6a, 6b parallel zur Vertikalen V, jedoch mit einem bestimmten Höhenversatz zur jeweils anderen Spulenhälfte ist auf diese Weise realisierbar.

Wie der Fachmann erkennt, sind die winkligen Anordnungen gemäß Fig. 6 und Fig. 7 grundsätzlich nicht auf symmetrische Anordnungen beschränkt.

Wie Fig. 8 vereinfacht schematisch zeigt, ist die gesamte Anordnung aus Induktionsspule 6 und Verstelleinrichtung 10 an einem Rahmen- oder Halteteil 11 angeordnet, welches auch die Kapazität oder Kapazitäten 5, 5' sowie eine Anschlusseinrichtung 12 zum Verbinden der Induktionsspule 6 beziehungsweise des aus Induktionsspule 6 und Kapazitäten 5, 5' gebildeten Schwingkreises 4 (vergleiche Fig. 1) mit dem HF-Generator 3 umfasst. Unter erneuter Bezugnahme auf die Fig. 1 bilden die vorstehend genannten Elemente somit den Siegelungskopf 1a der Versiegelungsvorrichtung 1. Dabei kommen zum Verbinden der Anschlusseinrichtung 12 flexible Anschlussmittel 13, wie Kabel oder dergleichen, zum Einsatz, um den Siegelungskopf 1 a bei einer bestehenden Versiegelungsvorrichtung 1 in einfacher Weise austauschen zu können.

## Patentansprüche

1. Versiegelungsvorrichtung (1) mit wenigstens einer Induktionsspule (6) aus einem zumindest teilweise flexiblen Leiter (6c, 6d, 6d', 6d") zum induktiven Versiegeln von durch die Versiegelungsvorrichtung (1) bewegten Behältern (2) durch Verschmelzen einer Behälteröffnung mit einer Siegelfolie (7),
**dadurch gekennzeichnet, dass**
die Induktionsspule (6) zwei zueinander in einem Abstand (d) angeordnete Spulenhälften (6a, 6b) aufweist, in denen der Leiter (6c) jeweils im Wesentlichen parallel zu einer Bewegungsrichtung (B) der Behälter (2) verläuft und zwischen denen die Behälter (2) hindurchbewegbar sind, wobei die Spulenhälften (6a, 6b) über wenigstens eine flexible Leiterschlaufe (6d, 6d', 6d"), die sich senkrecht zur Bewegungsrichtung (B) der Behälter (2) erstreckt, zu der Induktionsspule (6) verbunden sind.

2. Versiegelungsvorrichtung (1) nach dem vorhergehenden Anspruch, **dadurch gekennzeichnet, dass** sich die wenigstens eine flexible Leiterschlaufe (6d, 6d', 6d") senkrecht zur Ebene der Behälteröffnung erstreckt.

3. Versiegelungsvorrichtung (1) nach einem der vorhergehenden Ansprüche, **dadurch gekennzeichnet, dass** der gesamte Leiter (6c, 6d, 6d', 6d") flexibel aus Litzendraht gebildet ist.

4. Versiegelungsvorrichtung (1) nach einem der vorhergehenden Ansprüche, **dadurch gekennzeichnet, dass** die Induktionsspule (6) mehrwindig ausgebildet ist, wobei Leiterabschnitte des Leiters (6c) in den Spulenhälften (6a, 6b) jeweils zueinander parallel angeordnet sind.

5. Versiegelungsvorrichtung (1) nach einem der vorhergehenden Ansprüche, **dadurch gekennzeichnet, dass** die Spulenhälften (6a, 6b) zum Einstellen des Abstands (d) der Spulenhälften zueinander beweglich angeordnet sind.

6. Versiegelungsvorrichtung (1) nach einem der vorhergehenden Ansprüche, **dadurch gekennzeichnet, dass** die Spulenhälften (6a, 6b) zum Einstellen eines endlichen Winkels (α, β) zueinander beweglich angeordnet sind, wobei der Winkel in Bezug auf die Bewegungsrichtung (B) der Behälter (2) und/oder in Bezug auf eine zu dieser senkrechte Richtung bestimmt ist.

7. Versiegelungsvorrichtung (1) nach einem der vorhergehenden Ansprüche, **dadurch gekennzeichnet, dass** die Induktionsspule (6) senkrecht zur Bewegungsrichtung (B) der Behälter (2) beweglich angeordnet ist.

8. Versiegelungsvorrichtung (1) nach einem der vorhergehenden Ansprüche, **dadurch gekennzeichnet, dass** die Induktionsspule (6) mit wenigstens einer Kapazität (5, 5') schaltungstechnisch zu einem Schwingkreis (4) gekoppelt, insbesondere in Reihe geschaltet ist.

9. Versiegelungsvorrichtung (1) nach Anspruch 8, **dadurch gekennzeichnet, dass** der Schwingkreis (4) Anschlussmittel (12) für eine flexible Verbindung mit einem Hochfrequenzgenerator (3) aufweist.

10. Versiegelungsvorrichtung (1) nach einem der vorhergehenden Ansprüche, **dadurch gekennzeichnet, dass** die Induktionsspule (6) in mehrere Teilspulen unterteilt ist und dass zwischen die Teilspulen jeweils eine Kapazität (5, 5') geschaltet ist.

11. Versiegelungsvorrichtung (1) nach einem der vorhergehenden Ansprüche, **dadurch gekennzeichnet, dass** die Induktionsspule (6), insbesondere jeweils die Spulenhälften (6a, 6b), zumindest teilweise mit einer Umhüllung (6e, 6f) aus einem Material umgeben sind, das eine gute magnetische Leitfähigkeit und eine schlechte elektrische Leitfähigkeit aufweist.

12. Versiegelungsvorrichtung (1) nach einem der vorhergehenden Ansprüche, **gekennzeichnet durch** wenigstens eine Verstelleinrichtung (10, 10') für eine Anordnung der Spulenhälften (6a, 6b).

13. Versiegelungsvorrichtung (1) nach Anspruch 12, **dadurch gekennzeichnet, dass** die Verstelleinrichtung (10, 10') für die Anordnung der Spulenhälften (6a, 6b) und wenigstens eine Verstelleinrichtung für eine Führungseinrichtung (9) für die Behälter (2) wirkungsmäßig gekoppelt und/oder in Form einer gemeinsamen Verstelleinrichtung (10, 10') ausgebildet sind.

14. Siegelungskopf (1a) für eine Versiegelungsvorrichtung (1) nach Anspruch 9, **dadurch gekennzeichnet, dass** der Siegelungskopf (1a) zumindest die Induktionsspule (6) und Anschlussmittel (12) für eine Verbindung der Induktionsspule (6) mit einem Hochfrequenzgenerator (3) sowie ggf. die Kapazität (5, 5') und/oder die Verstelleinrichtung (10, 10') für die Anordnung der Spulenhälften (6a, 6b) und/oder die Verstelleinrichtung (10, 10') für die Führungseinrichtung (9) für die Behälter (2) umfasst.

## Claims

1. A sealing device (1) with at least one induction coil (6) made from an at least partially flexible conductor (6c, 6d, 6d', 6d") for the inductive sealing of containers (2) that are moved through the sealing device (1) by fusion of a container opening with a sealing film (7),
**characterized in that**
the induction coil (6) has two coil halves (6a, 6b) arranged at a distance (d) apart, in which the conductor (6c) in each case extends essentially parallel to a direction of motion (B) of the containers (2), and between which the containers (2) can be moved through, wherein the coil halves (6a, 6b) are connected to form the induction (6) coil via at least one flexible conductor loop (6d, 6d', 6d"), which extends perpendicular to the direction of motion (B) of the containers (2).

2. The sealing device (1) according to the previous claim, **characterized in that** the at least one flexible conductor loop (6d, 6d', 6d") extends perpendicular to the plane of the container opening.

3. The sealing device (1) according to one of the previous claims,
**characterized in that** the entire conductor (6c, 6d, 6d', 6d") is formed in a flexible way from litz wire.

4. The sealing device (1) according to one of the previous claims, **characterized in that** the induction coil (6) is constructed with multiple windings, wherein conductor sections of the conductor (6c) are arranged in the coil halves (6a, 6b) respectively parallel to one another.

5. The sealing device (1) according to one of the previous claims, **characterized in that** the coil halves (6a, 6b) are movable for adjusting the distance (d) of the coil halves relative to one another.

6. The sealing device (1) according to one of the previous claims, **characterized in that** the coil halves (6a, 6b) are movable for adjusting a finite angle (α, β) between them, wherein the angle is determined in relation to the direction of motion (B) of the containers (2) and/or in relation to a direction perpendicular to this.

7. The sealing device (1) according to one of the previous claims, **characterized in that** the induction coil (6) is movable perpendicularly to the direction of motion (B) of the containers (2).

8. The sealing device (1) according to one of the previous claims, **characterized in that** the induction coil (6) is coupled with at least one capacitance (5, 5') in an electronic circuit to form a resonant circuit (4), being in particular connected in series.

9. The sealing device (1) according to claim 8, **characterized in that** the resonant circuit (4) has connecting means (12) for a flexible connection to a high-frequency generator (3).

10. The sealing device (1) according to one of the previous claims, **characterized in that** the induction coil (6) is divided into multiple sub-coils and that a capacitance (5, 5') is connected between each of the sub-coils.

11. The sealing device (1) according to one of the previous claims, **characterized in that** the induction coil (6), in particular the coil halves (6a, 6b), are surrounded at least partially by an enclosure (6e, 6f) made from a material which has good magnetic conductivity and poor electrical conductivity.

12. The sealing device (1) according to one of the previous claims, **characterized by** at least one adjustment device (10, 10') for an arrangement of the coil halves (6a, 6b).

13. The sealing device (1) according to claim 12, **characterized in that** the adjustment device (10, 10') for the arrangement of the coil halves (6a, 6b) and at least one adjustment device for a guiding device (9) for the containers (2) are cooperatively coupled and/or constructed in the form of a joint adjustment device (10, 10').

14. A sealing head (1a) for a sealing device (1) according to claim 9, **characterized in that** the sealing head (1a) comprises at least the induction coil (6) and connecting means (12) for connecting the induction coil (6) to a high-frequency generator (3) and possibly the capacitance (5, 5'), and/or the adjustment device (10, 10') for the arrangement of the coil halves (6a, 6b), and/or the adjustment device (10, 10') for the guiding device (9) for the containers (2).

## Revendications

1. Dispositif de scellage (1) comportant au moins une bobine d'induction (6) composée d'un conducteur (6c, 6d, 6d', 6d") au moins partiellement flexible pour le scellage par induction de contenants (2) déplacés par le dispositif de scellage (1) par fusion d'une ouverture du contenant avec une feuille de scellage (7),
**caractérisé en ce que**
la bobine d'induction (6) présente deux demi-bobines (6a, 6b) disposées à une distance (d) l'une de l'autre, dans chacune desquelles le conducteur (6c) s'étend essentiellement parallèlement à une direction de déplacement (B) des contenants (2) et entre lesquelles les contenants (2) sont déplaçables, les demi-bobines (6a, 6b) étant reliées par au moins une boucle de conducteur flexible (6d, 6d', 6d") qui s'étend perpendiculairement à la direction de déplacement (B) des contenants (2), pour former la bobine d'induction (6).

2. Dispositif de scellage (1) selon la revendication précédente, **caractérisé en ce que** ladite au moins une boucle de conducteur flexible (6d, 6d', 6d") s'étend perpendiculairement au plan de l'ouverture du contenant.

3. Dispositif de scellage (1) selon une des revendications précédentes, **caractérisé en ce que** tout le conducteur (6c, 6d, 6d', 6d") est formé de fil torsadé flexible.

4. Dispositif de scellage (1) selon une des revendications précédentes, **caractérisé en ce que** la bobine d'induction (6) est formée de plusieurs spires, des portions de conducteur du conducteur (6c) étant disposées parallèlement les unes aux autres dans chacune des demi-bobines (6a, 6b).

5. Dispositif de scellage (1) selon une des revendications précédentes, **caractérisé en ce que** les demi-bobines (6a, 6b) sont disposées de manière à pouvoir être déplacées l'une par rapport à l'autre pour régler la distance (d) des demi-bobines.

6. Dispositif de scellage (1) selon une des revendications précédentes, **caractérisé en ce que** les demi-bobines (6a, 6b) sont disposées de manière à pouvoir être déplacées l'une par rapport à l'autre pour régler un angle fini (α, β), l'angle étant déterminé par rapport à la direction de déplacement (B) des contenants (2) et/ou par rapport à une direction perpendiculaire à celle-ci.

7. Dispositif de scellage (1) selon une des revendications précédentes, **caractérisé en ce que** la bobine d'induction (6) est disposée de manière à pouvoir être déplacée perpendiculairement à la direction de déplacement (B) des contenants (2).

8. Dispositif de scellage (1) selon une des revendications précédentes, **caractérisé en ce que** la bobine d'induction (6) est couplée électriquement, en particulier en série, à au moins une capacité (5, 5') pour former un circuit oscillant (4).

9. Dispositif de scellage (1) selon la revendication 8, **caractérisé en ce que** le circuit oscillant (4) présente des moyens de connexion (12) pour une liaison flexible avec un générateur à haute fréquence (3).

10. Dispositif de scellage (1) selon une des revendications précédentes, **caractérisé en ce que** la bobine d'induction (6) est divisée en plusieurs bobines partielles et qu'une capacité (5, 5') est chaque fois montée entre les bobines partielles.

11. Dispositif de scellage (1) selon une des revendications précédentes, **caractérisé en ce que** la bobine d'induction (6), en particulier chacune des demi-bobines (6a, 6b), sont entourées au moins partiellement par une enveloppe (6e, 6f) composée d'un matériau qui présente une bonne conductibilité magnétique et une mauvaise conductibilité électrique.

12. Dispositif de scellage (1) selon une des revendications précédentes, **caractérisé par** au moins un dispositif de réglage (10, 10') pour un arrangement des demi-bobines (6a, 6b).

13. Dispositif de scellage (1) selon la revendication 12, **caractérisé en ce que** le dispositif de réglage (10, 10') pour l'arrangement des demi-bobines (6a, 6b) et au moins un dispositif de réglage pour un dispositif de guidage (9) pour les contenants (2) sont couplés fonctionnellement et/ou réalisés sous la forme d'un dispositif de réglage (10, 10') commun.

14. Tête de scellage (1a) pour un dispositif de scellage (1) selon la revendication 9, **caractérisée en ce que** la tête de scellage (1a) comprend au moins la bobine d'induction (6) et des moyens de connexion (12) pour une liaison de la bobine d'induction (6) avec un générateur à haute fréquence (3) ainsi que, le cas échéant, la capacité (5, 5') et/ou le dispositif de réglage (10, 10') pour l'arrangement des demi-bobines (6a, 6b) et/ou le dispositif de réglage (10, 10') pour le dispositif de guidage (9) pour les contenants (2).
